# EUROPÄISCHE PATENTSCHRIFT

(11) **EP 0 607 509 B1**
(45) Veröffentlichungstag und Bekanntmachung des Hinweises auf die Patenterteilung: **17.01.1996**
(21) Anmeldenummer: 93117541.8
(22) Anmeldetag: 29.10.1993
(51) Int. Cl.: F01L 1/344

(54) **Vorrichtung zur Winkelverstellung einer Welle gegenüber ihrem Antriebsrad, insbesondere einer Nockenwelle gegenüber ihrem Nockenwellenrad**
Device for varying the angular position of a shaft with its driving wheel, in particular, of a camshaft with its driving wheel
Dispositif de variation angulaire d'un arbre par rapport à son pignon d'entraînement, en particulier d'un arbre à cames par rapport à son pignon d'entraînement

(30) Priorität: 06.11.1992 DE 4237472
(43) Veröffentlichungstag der Anmeldung: 27.07.1994
(73) Patentinhaber: FORD-WERKE AKTIENGESELLSCHAFT, D-50725 Köln (DE); FORD MOTOR COMPANY LIMITED, Brentwood, Essex CM13 3BW (GB); FORD FRANCE SOCIETE ANONYME, F-92506 Rueil Malmaison Cedex (FR)
(72) Erfinder: Weber, Gottfried, D-50672 Köln (DE); Abts, Manfred, D-51519 Odenthal (DE); Meurer, Josef, D-53844 Troisdorf (DE); Metz, Hans, D-50259 Pulheim (DE)
(74) Vertreter: Messulam, Alec Moses

(56) Entgegenhaltungen:
- DE-A- 1 963 549
- DE-A- 3 438 088
- US-A- 5 152 263

## Beschreibung

Die Erfindung bezieht sich auf eine Vorrichtung zur Winkelverstellung einer Welle gegenüber ihrem Antriebsrad, insbesondere einer Nockenwelle gegenüber ihrem Nockenwellenrad, nach dem Oberbegriff des Patentanspruches 1 bzw. 4.

Aus der DE-OS 19 47 362 ist eine Vorrichtung zur Winkelverstellung einer Nockenwelle gegenüber ihrem Nockenwellenrad bekannt, bei dem das begrenzt auf der Welle drehbar angeordnete Nockenwellenrad in Abhängigkeit von der auf Rollengewichte einwirkenden Fliehkraft verstellbar ist, wobei sich die Rollengewichte einerseits an Anlageflächen am Nokkenwellenrad und an Anlageflächen an der Nockenwelle abstützen.

Aus der DE-OS 19 63 549 ist eine Vorrichtung zur Winkelverstellung einer Nockenwelle gegenüber ihrem Nockenwellenrad bekannt, wobei das begrenzt drehbar auf der Nockenwelle angeordnete Nockenwellenrad an einer Innenumfangsfläche mit mehreren, jeweils eine Kugel aufnehmenden Schrägnuten versehen ist und die Kugeln in Eingriff mit mehreren entsprechenden Schrägnuten an einem mit der Nockenwelle verbundenen Nabenteil stehen, der durch hydraulische Mittel (Kolben und Zylinder) in Abhängigkeit von gesteuert zugeführtem Druckmittel axial verschiebbar ist, wodurch sich durch die mit den Schrägnuten zusammenwirkenden Kugeln eine Winkelverstellung zwischen der Nockenwelle und dem Nockenwellenrad ergibt.

Diese bekannte Vorrichtung weist den Nachteil auf, daß die Herstellung der jeweils eine Kugel aufnehmenden, mehreren Schrägnuten in den beiden Bauteilen aufwendig ist und daß nur kleinere Winkelverstellungen erzielt werden können, wenn, wie der Bauraum es zumeist erfordert, nur eine begrenzte axiale Bewegung des hydraulischen Kolbens im Zylinder bereitgestellt werden kann.

Aus der EP-PS 0,163,046 ist eine Vorrichtung zur Winkelverstellung an einer Welle, insbesondere einer Nockenwelle gegenüber ihrem Nockenwellenrad bekannt, bei der ein begrenzt drehbar auf der Welle angeordnetes Antriebsrad durch hydraulische Mittel (Kolben und Zylinder) in Abhängigkeit von gesteuert zugeführtem Druckmittel verstellt wird, wobei ein radial bewegbarer Kolben zumindest eine Kugel belastet, die sich einerseits an einer, eine tangentiale Reaktionskraft verursachenden ersten Anlagefläche an der Welle und an einer eben solchen zweiten Anlagefläche am Antriebsrad abstützt.

Diese bekannte Vorrichtung weist den Nachteil auf, daß die in radialer Richtung angeordneten Kolben und Zylinder eine aufwendige Herstellung erforderlich machen und daß durch die begrenzte radiale Bewegungsmöglichkeit der Kolben und der Kugeln zwischen den ersten und zweiten Anlageflächen wieder nur eine Winkelverstellung in kleinen Bereichen möglich ist.

Die Aufgabe der Erfindung ist es, ausgehend von der letztgenannten Vorrichtung, eine Vorrichtung zur Winkelverstellung einer Welle gegenüber ihrem Antriebsrad insbesondere einer Nockenwelle gegenüber ihrem Nockenwellenrad, gemäß dem Oberbegriff des Patentanspruches 1 bzw 4 derart zu verbessern, daß bei einfacher und raumsparender Bauform eine Winkelverstellung in einem großen Winkelbereich ermöglicht wird.

Gemäß der Erfindung wird diese Aufgabe gelöst, indem bei einer Vorrichtung zur Winkelverstellung einer Welle gegenüber ihrem Antriebsrad, insbesondere einer Nockenwelle gegenüber ihrem Nockenwellenrad der im Oberbegriff des Patentanspruches 1 bzw. 4 erläuterten Art, die im Kennzeichenteil des Patentanspruches 1 bzw. 4 aufgezeigten Merkmale angewendet werden.

Dadurch, daß zwischen der ersten Anlagefläche an der Welle und der zweiten Anlagefläche am Antriebsrad eine Kugelreihe von ersten Kugeln angeordnet ist und eine Kugelreihe von zweiten Kugeln axial und/oder radial benachbart zur Kugelreihe von ersten Kugeln angeordnet ist und diese Kugeln über einen hydraulischen, axial bewegbaren Kolben in axialer und/oder radialer Richtung in die Kugelreihe von ersten Kugeln hineindrückbar sind, wird der Bogenabstand zwischen der ersten und zweiten Anlagefläche um der Anzahl der Kugeln entsprechendes Vielfaches des Eindringmaßes der zweiten Kugeln verändert.

In den Ansprüchen 2, 3, 5 und 6 sind weitere Ausführungsformen der Erfindung erläutert.

Die Erfindung wird in Verbindung mit zwei in den beiliegenden Zeichnungen gezeigten Ausführungsformen näher erläutert. Es zeigt:
- Fig. 1: einen vertikalen Schnitt durch eine erfindungsgemäße Vorrichtung zur Winkelverstellung einer Welle gegenüber ihrem Antriebsrad, entlang der Linie I-I in Fig. 2, wobei in der oberen Hälfte der Figur die Ausgangslage der Vorrichtung und in der unteren Hälfte die Endlage nach erfolgter Verstellung gezeigt ist;
- Fig. 2: zeigt einen vertikalen Teilschnitt durch die Ausführungsform der Fig. 1 entlang der Linie II-II, aus dem die beiden Kugelreihen mit ihren entsprechenden Anlageflächen an der Welle bzw. dem Antriebsrad ersichtlich sind;
- Fig. 3: einen vertikalen Teilschnitt durch eine weitere Ausführungsform der Erfindung, entlang der Linie III-III in Fig. 4, wobei wieder in der oberen Hälfte der Figur die Ausgangslage der Vorrichtung und in der unteren Hälfte die Endlage nach erfolgter Verstellung gezeigt ist:
- Fig. 4: einen vertikalen Teilschnitt durch die Ausführungsform nach Fig. 3 entlang der Linie IV-IV, aus der die Anordnung der beiden Kugelreihen in Verbindung mit ihren Anlageflächen an der Welle bzw. am Antriebsrad ersichtlich ist;
- Fig. 5: einen Teilschnitt entlang der Linie V-V in Fig. 4 und
- Fig. 6: einen Teilschnitt entlang der Linie VI-VI in Fig. 4.

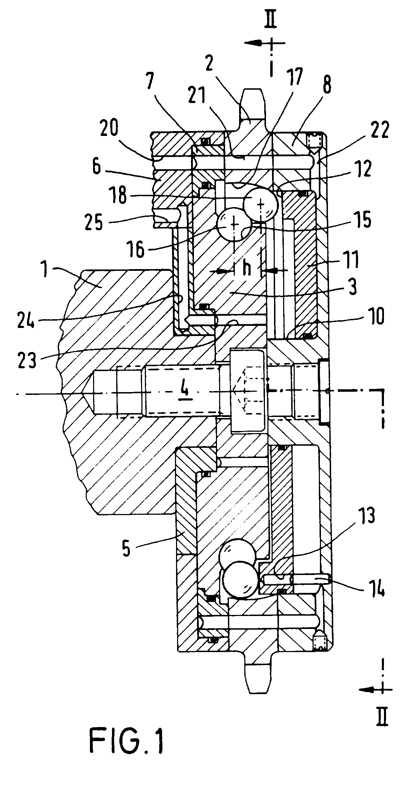

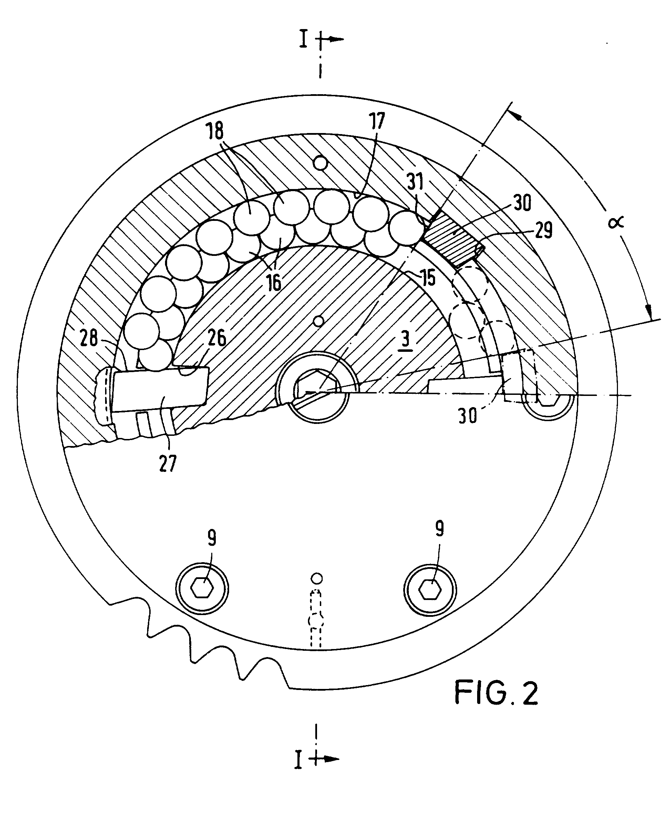

Die in den Figuren 1 und 2 gezeigte erste Bauform der erfindungsgemäßen Vorrichtung zur Winkelverstellung einer Welle gegenüber ihrem Antriebsrad besteht im wesentlichen aus einer Welle 1 und einem Antriebsrad 2, wobei das Antriebsrad 2 begrenzt drehbar auf einem Nabenbauteil 3 angeordnet ist, das über eine Schraube 4 drehfest mit der Welle 1 verbunden ist.

Ein mit dem Maschinengehäuse (nicht gezeigt) verbundenes Axial-Lagerteil 5 ist mit einer Druckmittelversorgungseinheit 6 für die Druckmittelzu- und -abfuhr verbunden und sorgt für die axiale Abstützung der Welle 1.

Das Antriebsrad 2 ist mit einem Ringbauteil 7 zur Axial-Sicherung und mit einem Deckelbauteil 8 mittels mehrerer Schrauben 9 (siehe Fig. 2) drehfest verbunden.

Im Deckelbauteil 8 ist ein ringförmiger Zylinder 10 ausgebildet, der einen ringförmigen Kolben 11 mit einem Ringansatz 12 aufnimmt, der durch eine Stift/Bohrung-Verbindung 13/14 gegen radiales Verdrehen gesichert ist.

Im Nabenbauteil 3 ist zumindest eine Kugelbahn 15 für eine Kugelreihe von ersten Kugeln 16 ausgebildet und am Innenumfang des Antriebsrades 2 ist eine Führungsbahn 17 für eine Kugelreihe von zweiten Kugeln 18 ausgebildet.

Von der Druckmittelversorgungseinheit 6 wird Druckmittel über Bohrungen 20, 21 und 22 zur einen Seite des Kolbens 11 geführt und auf der anderen Seite des Kolbens 11 kann verdrängtes Druckmittel über Bohrungen 23, 24 und 25 abfließen.

Selbstverständlich sind die verschiedenen Bauteile, die zueinander begrenzt verdrehbar oder axial bewegbar sind, über entsprechende Dichtungsanordnungen, vorzugsweise O-Ring-Dichtungsanordnungen gegeneinander abgedichtet, derart, daß einerseits eine ausreichende Schmierung an den Bewegungsflächen ermöglicht, andererseits jedoch ein Austritt von Druckmittel zuverlässig verhindert wird.

Wie aus Fig. 2 ersichtlich ist, ist in einer radialen Aufnahmenut 26 am Außenumfang des Nabenbauteiles 3 ein Blokkierelement 27 angeordnet, das eine erste Anlagefläche 28 für die Kugelreihe von ersten Kugeln 16 bildet.

In einer Nut 29 am Innenumfang des Antriebsrades 2 ist ein Anschlagteil 30 befestigt, das eine zweite Anlagefläche 31 für die Kugelreihe von zweiten Kugeln 18 bildet.

Das Blockierelement 27 ist eingebaut um zu verhindern, daß die Welle 1 durch die, bei einer Nockenwelle auf diese einwirkende Rückdrehmoment ungewollt verdreht wird. So lange die Kugeln 16 einen Druck auf das Blockierelement 27 ausüben, läuft dieses frei am Antriebsrad 2 vorbei. Sobald aber die Welle 1 schneller dreht und somit der Druck der Kugeln 16 auf das Blockierelement 27 verlorengeht, klappt dieses durch die auftretenden Kräfte (Reibung und/oder Zentrifugalkrakt) oder durch die Kraft einer eingebauten Feder (nicht gezeigt) hoch und blockiert das Antriebsrad 2.

Soll eine Verdrehung der Welle 1 gegenüber ihrem Antriebsrad 2 bewirkt werden, so wird Druckmittel von der Druckmittelversorgungseinheit 6 über die Bohrungen 20, 21 und 23 zur einen Seite des Kolbens 11 geführt und dieser wird hierdurch in Fig. 1 gesehen, nach links bewegt. Der Ringansatz 12 des Kolbens 11 drückt hierdurch auf die Kugelreihe von zweiten Kugeln 18 und bewegt dabei die Kugeln 18 entlang der bogenförmig ausgebildeten Kugelführung 17 axial und radial zwischen die ersten Kugeln 16 der anderen Kugelreihe, wodurch die Abstände zwischen den einzelnen Kugeln beider Kugelreihen vergrößert werden.

Die Abstandsänderung pro Kugel multipliziert sich mit der Anzahl der Kugeln und ist weiterhin abhängig vom Kugelradius und der Form der Kugelführung 17. Wird der Kolben 11 um den in der oberen Hälfte der Fig. 1 gezeigten Hub h nach links bewegt, so daß die in der unteren Hälfte der Fig. 1 gezeigte Endlage erreicht wird, wird eine Winkelverstellung erreicht, deren Gesamtwinkel in Fig. 2 mit angegeben ist.

Soll die Winkelverstellung rückgängig gemacht werden, so wird Druckmittel diesmal über die Bohrungen 25, 24 und 23 zur anderen Seite des Kolbens 11 geführt und dieser wird hierdurch in seine Ausgangslage zurück nach rechts bewegt.

Die Kugelreihe von zweiten Kugeln 18 bewegt sich hierbei durch die einwirkenden Radialkräfte, begünstigt durch einen geringfügigen Mittenversatz der Kugelreihe 16 und 18, wieder in ihre axial verschobene Ausgangslage zurück.

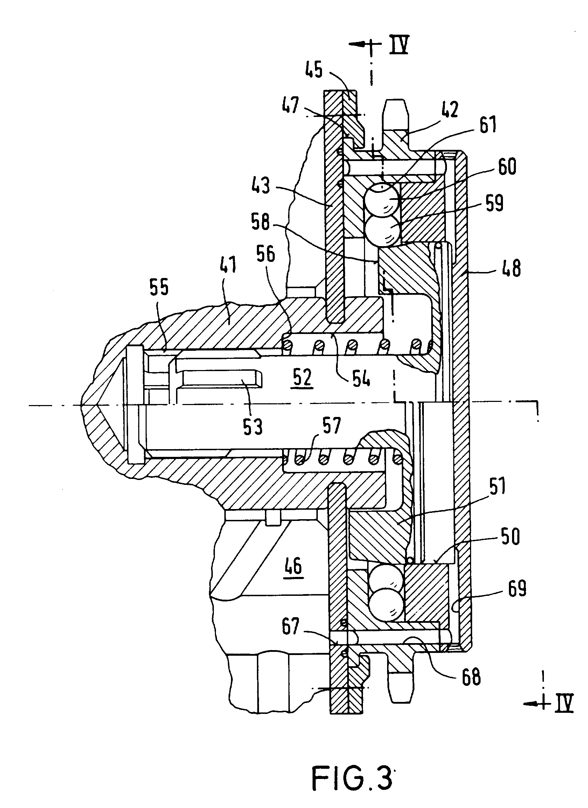

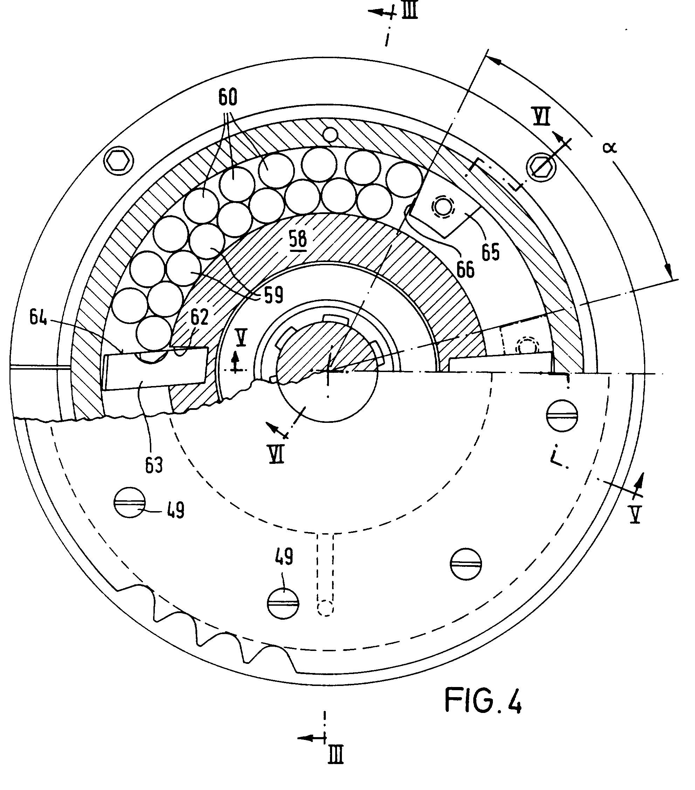

In Zusammenhang mit den Figuren 3 und 4 wird eine weitere Ausführungsform der Erfindung erläutert, bei der die beiden zusammenwirkenden Kugelreihen von ersten und zweiten Kugeln axial auf gleicher Höhe jedoch auf konzentrisch unterschiedlichen Durchmessern liegen, und durch einen entsprechend geformten Ringkolben radial nach außen verlagert werden.

Die in den Figuren 3 und 4 gezeigte weitere Ausführungsform einer erfindungsgemäßen Vorrichtung zur Winkelverstellung einer Welle gegenüber ihrem Antriebsrad besteht wieder im wesentlichen aus einer Welle 41 und einem Antriebsrad 42, wobei das Antriebsrad 42 begrenzt drehbar auf einem Axiallagerteil 43 angeordnet ist, das mit dem Maschinengehäuse (nicht gezeigt) verbunden ist.

Ein mit dem Maschinengehäuse (nicht gezeigt) verbundene Druckmittelversorgungseinheit 46 sorgt für die Druckmittelzu- und -abfuhr.

Das Antriebsrad 42 ist mit einem Ringansatz 47 versehen, der über ein Axial-Lagerbauteil 45 am Axiallagerteil 43 begrenzt drehbar gehalten ist.

Ein Deckelbauteil 48 ist über eine Vielzahl von Schrauben 49 (siehe Fig. 4) drehfest mit dem Antriebsrad 42 verbunden.

Im Deckelbauteil 48 ist ein ringförmiger Zylinder 50 gebildet, in dem ein tellerförmiger Kolben 51 axial verschiebbar aufgenommen ist. Der tellerförmige Kolben 51 weist einen zentrischen Schaft 52 mit einem Vielkeilwellenprofil 53 auf, mittels dem er in einer entsprechenden Aufnahmebohrung 54 in der Welle 41 mit einem Vielkeilwellenabschnitt 55 drehfest aber axial bewegbar aufgenommen ist.

Im vorderen Bereich der Aufnahmebohrung 54 ist zwischen einem Absatz 56 und dem Kolben 51 eine Rückstellfeder 57 angeordnet.

Der tellerförmige Kolben 51 weist wieder einen Ringansatz 58 auf, dessen Außenumfang eine Kugelführung aufweist und eine Abstützung für eine Kugelreihe von ersten Kugeln 59 bildet, die in Eingriff mit einer radial außerhalb angeordneten Kugelreihe von zweiten Kugeln 60 stehen, die sich radial nach außen an einer Kugelbahn 61 am Antriebsrad 42 abstützen. In einer Nut 62 am Außenumfang des Ringansatzes 58 des Kolbens 51 ist wieder ein Blockierelement 63 angeordnet, das eine erste Anlagefläche 64 für die Kugelreihe von ersten Kugeln 59 bildet.

Die äußere Kugelbahn 61 endet in einem Vorsprung 65, der eine zweite Anlagefläche 66 für die Kugelreihe von zweiten Kugeln 60 bildet.

Eine Druckmittelzufuhr von der Druckmittelversorgungseinheit 46 erfolgt über Bohrungen 67, 68 und 69, wobei in diesem Fall eine einseitige Druckmittelbeaufschlagung entgegen der Kraft der Feder 57 vorgesehen ist.

Soll eine Verdrehung der Welle 41 gegenüber ihrem Antriebsrad 42 bewirkt werden, so wird Druckmittel von der Druckmittelversorgungseinheit 46 über die Bohrungen 67, 68 und 69 zur einen Seite des Kolbens 51 geführt, dieser wird hierdurch in Fig. 3 gesehen entgegen der Kraft der Feder 57 nach links bewegt. Dadurch wird die Kugelreihe von ersten Kugeln 59 durch die Kontur des Ringansatzes 58 des Kolbens 51 radial nach außen verlagert, wodurch sie in die Kugelreihe von zweiten Kugeln 60 hineingedrückt werden.

Hierbei multipliziert sich wieder die sich durch die radiale Abstandsänderung einer Kugel ergebende Verdrängungsbewegung mit der Anzahl der angeordneten Kugeln und es kann wieder bei einer vergleichsweise geringen axialen Bewegungsmöglichkeit des Kolbens 51 eine Winkelverstellung in einem großen Bereich ausgeführt werden, siehe in Fig. 4 den mit angegebenen Winkelbereich.

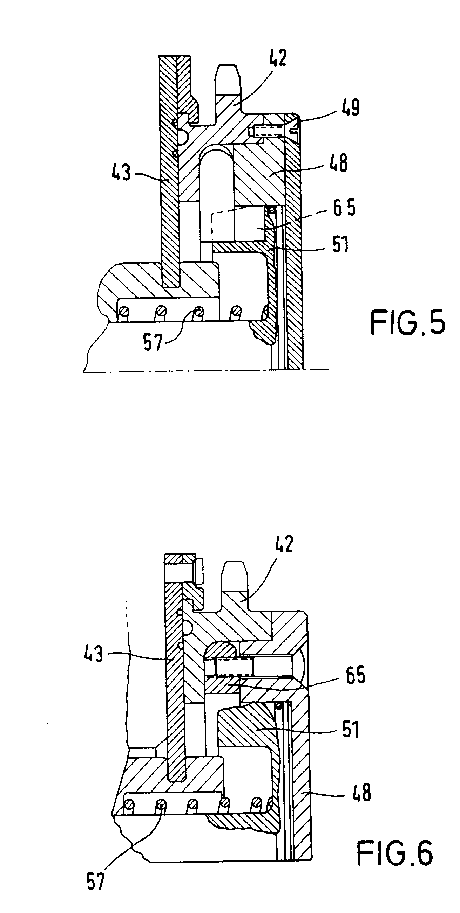

In den Figuren 5 und 6 sind einige Details der Befestigung der Bauteile der zweiten Ausführungsform der Erfindung gezeigt.

Durch eine entsprechend veränderte Anordnung der Kolben und Kugelreiben ist auch eine Verstellung von innen nach außen denkbar, d.h. die Kugeln 16 sind nach den Kugeln 18 verschiebbar.

Selbstverständlich kann die Bewegung des auf die Kugeln einwirkenden Bauteiles auch durch eine mechanische oder eine elektromotorische Vorrichtung anstelle der aufgezeigten hydraulischen Ausführung bewerkstelligt werden.

## Patentansprüche

1. Vorrichtung zur Winkelverstellung einer Welle (1) gegenüber ihrem Antriebsrad (2), insbesondere einer Nockenwelle gegenüber ihrem Nockenwellenrad, wobei die Verstellung durch hydraulisch axial verlagerbare Mittel (10/11) in Abhängigkeit von gesteuert zugeführtem Druckmittel erfolgt, wobei zumindest ein Kolben zumindest eine Kugel belastet, die sich an einer eine tangentiale Reaktionskraft verursachenden ersten Anlagefläche (28) an der Welle (1) und an einer ebensolchen zweiten Anlagefläche (31) am Antriebsrad (2) abstützt,
**dadurch gekennzeichnet,** daß
- zwischen der ersten Anlagefläche (28) an der Welle (1) und der zweiten Anlagefläche (31) am Antriebsrad (2) eine Kugelreihe von ersten Kugeln (16) und eine Kugelreihe von zweiten Kugeln (18) angeordnet ist und
- die Kugelreihe von zweiten Kugeln (18) über den hydraulisch axial bewegbaren Kolben (11) axial und/ oder radial in die Kugelreihe von ersten Kugeln (16) hineindrückbar sind und damit der Bogenabstand zwischen der ersten und zweiten Anlagefläche (28 und 31) in weiten Bereichen veränderbar ist.

2. Vorrichtung zur Winkelverstellung nach Anspruch 1,
**dadurch gekennzeichnet**, daß
- an der Welle (1) ein Nabenbauteil (3) über eine Schraube (4) drehfest angeordnet ist und dieses Nabenbauteil (3) an seinem Außenumfang zumindest eine Kugelbahn (15) für die Kugelreihe von ersten Kugeln (16) aufweist und
- das Antriebsrad (2) an seinem Innenumfang eine Führungsbahn (17) für die Kugelreihe von zweiten Kugeln (18) aufweist und mit einem Ringbauteil (7) und einem Deckelbauteil (8) mittels mehrerer Schrauben (9) drehfest verbunden ist und
- im Deckelbauteil (8) ein Ringzylinder (10) ausgebildet, in dem ein Ringkolben (11) angeordnet ist, der mit einem Ringansatz (12) auf die Kugelreihe von zweiten Kugeln (18) axial einwirkt.

3. Vorrichtung zur Winkelverstellung nach den Ansprüchen 1 und 2,
**dadurch gekennzeichnet**, daß
- der im Ringzylinder (10) axial bewegbare Ringkolben (11) über eine Stift/Bohrung-Verbindung (14/13) gegen Verdrehen festgelegt ist.

4. Vorrichtung zur Winkelverstellung einer Welle (41) gegenüber ihrem Antriebsrad (42), insbesondere einer Nokkenwelle gegenüber ihrem Nockenwellenrad, wobei die Verstellung durch hydraulisch axial verlagerbare Mittel (50/51) in Abhängigkeit von gesteuert zugeführtem Druckmittel erfolgt, wobei zumindest ein Kolben zumindest eine Kugel belastet, die sich an einer, eine tangentiale Reaktionskraft verursachenden ersten Anlagefläche (64) an der Welle (41) und einer eben solchen zweiten Anlagefläche (66) am Antriebsrad (42) abstützt,
**dadurch gekennzeichnet**, daß
- zwischen der ersten Anlagefläche (64) an der Welle (41) und der zweiten Anlagefläche (66) am Antriebsrad (42) eine Kugelreihe von ersten Kugeln (59) und eine Kugelreihe von zweiten Kugeln (60) angeordnet ist und
- die Kugelreihe von ersten Kugeln (59) radial innerhalb der Kugelreihe von zweiten Kugeln (60) angeordnet ist und
- die Kugelreihe von ersten Kugeln (59) über den Ringansatz (58) des axial verlagerbaren Kolbens (51) und dessen etwa kegelförmige Außenkontur radial nach außen in die Kugelreihe von zweiten Kugeln (60) hineindrückbar sind und damit der Bogenabstand zwischen der ersten und zweiten Anlagefläche (64 und 66) in weiten Bereichen veränderbar ist.

5. Vorrichtung zur Winkelverstellung einer Welle nach Anspruch 4,
**dadurch gekennzeichnet,** daß
- das Antriebsrad (42) mit einem Ringansatz (47) über ein Lagerelement (45) axial festgelegt ist und mit einem Deckelbauteil (48) verbunden ist, in dem ein Zylinder (50) ausgebildet ist und
- der im Zylinder (50 axial verlagerbare Kolben (51) mit einem Schaft (52) versehen ist, der über ein Vielkeilwellenprofil (53) in einer entsprechenden Aufnahmebohrung (54) mit einem Vielkeilwellenprofil (55) in der Welle (41) axial bewegbar aber verdrehfest verbunden ist und
- im vorderen Bereich der Aufnahmebohrung (54) eine Rückstellfeder (57) angeordnet ist, die auf die eine Seite des Kolbens (51) einwirkt, um diesen in seine Ausgangslage zurückzuführen, sobald das über Bohrungen (67, 68 und 69) einwirkende Druckmittel abgeschaltet wird.

6. Vorrichtung zur Winkelverstellung einer Welle nach einem der vorangegangenen Ansprüche 1 bis 5,
**dadurch gekennzeichnet**, daß
- in einer radialen Aufnahmenut (26/62) des Außenumfanges des Nabenteiles (3/58) ein Blockierelement (27/69) angeordnet, das bei Wegfall der Verstellkraft durch Fliekraft- oder Federkraftwirkung eine treibende Verbindung zwischen Nabenteil (3/58) und dem Antriebsrad (2/42) sichert.

## Claims

1. A device for angular adjustment of a shaft (1) relative to its drive wheel (2), in particular of a camshaft relative to its camshaft drive wheel, wherein the adjustment is effected through hydraulically axially displaceable means (10/11) in dependence on a controlled supply of pressure medium and at least one piston applies a load to at least one ball that is supported on a first bearing surface (28) on the shaft (1) that gives rise to a tangential force of reaction and on a second such bearing surface (31) on the drive wheel (2),
characterised in that
- a row of first balls (16) and a row of second balls (18) are arranged between the first bearing surface (28) on the shaft (1) and the second bearing surface (31) on the drive wheel (2),
- the balls (18) of the second row being forceable axially and/or radially into the row of first balls (16) by the hydraulically axially moveable piston (11) so that the angular distance between the first and second bearing surfaces (28 and 31) can be changed within wide limits.

2. An angular adjustment device according to claim 1,
characterised in that
- a hub member (3) is held non-rotatably on the shaft (1) by a screw (4) and this hub member (3) has on its outer surface at least one ball track (15) for the row of first balls (16), and
- the drive wheel (2) has on its inner surface a race (17) for the row of second balls (18) and is connected non-rotatably to an annular member (7) and a cover (8) by means of a plurality of screws (9), and
- an annular cylinder (10) is formed in the cover (8) in which an annular piston (11) is arranged that acts axially through an annular extension (12) on the row of second balls (18).

3. An angular adjustment device according to claim 1 or claim 2,
characterised in that
- the annular piston (11) axially moveable in the annular cylinder (10) is secured against rotation by a peg and socket connection (14/13).

4. A device for angular adjustment of a shaft (41) relative to its drive wheel (42), in particular of a camshaft relative to its camshaft drive wheel, wherein the adjustment is effected through hydraulically axially displaceable means (50/51) in dependence on a controlled supply of pressure medium and at least one piston applies a load to at least one ball that is supported on a first bearing surface (64) on the shaft (41) that gives rise to a tangential force of reaction and on a second such bearing surface (66) on the drive wheel (42),
characterised in that
- a row of first balls (59) and a row of second balls (60) are arranged between the first bearing surface (64) on the shaft (41) and the second bearing surface (66) on the drive wheel (42), with
- the row of first balls (59) being arranged radially inwardly of the row of second balls (60), and
- the balls (59) of the first row being forceable radially outwardly into the row of second balls (60) by the annular extension (58) of the axially displaceable piston (51) so that the angular distance between the first and second bearing surfaces (64 and 66) can be changed within wide limits.

5. A device for angular adjustment of a shaft according to claim 4,
characterised in that
- the drive wheel (42) has an annular extension (47) by which it is retained axially by a bearing member (45) and is connected to a cover (48) in which a cylinder (50) is formed;
- the piston (51) axially displaceable in the cylinder (50) is provided with a shaft (52) that is connected axially movably but non-rotatably by way of a splined profile (53) in a corresponding fitting bore (54) in the shaft (41) with a splined profile (55); and
- a return spring (57) is arranged in the front part of the fitting bore (54) and acts on one side of the piston (51) in order to return it to its starting position as soon as the pressure medium acting through passages (67, 68 and 69) is turned off.

6. A device for angular adjustment of a shaft according to any one of the preceding claims 1 to 5,
characterised in that
- a blocking member (27/69) is arranged in a radial receiving groove (26/62) in the outer surface of the hub (3/58) which, when the adjusting force ceases, ensures a driving connection between the hub (3/58) and the drive wheel (2/42) by the action of centrifugal or spring force.

## Revendications

1. Dispositif de décalage angulaire d'un arbre (1) par rapport à sa roue d'entraînement (2), en particulier d'un arbre à cames par rapport à son pignon de distribution, dans lequel le décalage s'effectue par des moyens (10/11) axialement déplaçables hydrauliquement en fonction de fluide de pression amené de façon contrôlée, et dans lequel au moins un piston charge au moins une bille s'appuyant sur une première face d'application ou de retenue (28) prévue sur l'arbre (1) et provoquant une force de réaction tangentielle, ainsi que sur une seconde face de retenue (31) semblable prévue sur la roue d'entraînement (2),
caractérisé en ce que
- une rangée de premières billes (16) et une rangée de secondes billes (18) sont placées entre la première face de retenue (28) sur l'arbre (1) et la seconde face de retenue (31) sur la roue d'entraînement (2) et
- la rangée de secondes billes (18) peut être enfoncée axialement et/ou radialement par le piston (11), déplaçable hydrauliquement dans le sens axial, dans la rangée de premières billes (16), ce qui permet de modifier l'étendue de l'arc entre les première et seconde faces de retenue (28 et 31) dans des plages importantes.

2. Dispositif de décalage angulaire selon la revendication 1, caractérisé en ce que
- une pièce (3) formant moyeu est montée solidaire en rotation sur l'arbre (1) à l'aide d'une vis (4) et est pourvue, à sa périphérie extérieure, d'au moins une piste de roulement (15) pour la rangée de premières billes (16),
- la roue d'entraînement (2) présente à sa périphérie intérieure une piste de guidage (17) pour la rangée de secondes billes (18) et est solidarisée en rotation, au moyen de plusieurs vis (9), avec une pièce annulaire ( 7) et une pièce (8) formant couvercle, et
- un cylindre annulaire (10) est formé dans le couvercle (8) et contient un piston annulaire (11) agissant axialement par un prolongement annulaire (12) sur la rangée de secondes billes (18).

3. Dispositif de décalage angulaire selon les revendications 1 et 2, caractérisé en ce que le piston annulaire (11), axialement mobile dans le cylindre annulaire (10), est empêché de tourner par un verrouillage formé par une goupille (14) enfoncée dans un trou (13).

4. Dispositif de décalage angulaire d'un arbre (41) par rapport à sa roue d'entraînement (42), en particulier d'un arbre à cames par rapport à son pignon de distribution, dans lequel le décalage s'effectue par des moyens (50/51) axialement déplaçables hydrauliquement en fonction de fluide de pression amené de façon contrôlée, et dans lequel au moins un piston charge au moins une bille s'appuyant sur une première face d'application ou de retenue (64) prévue sur l'arbre (41) et provoquant une force de réaction tangentielle, ainsi que sur une seconde face de retenue (66) semblable prévue sur la roue d'entraînement (42),
caractérisé en ce que
- une rangée de premières billes (59) et une rangée de secondes billes (60) sont placées entre la première face de retenue (64) sur l'arbre (41) et la seconde face de retenue (66) sur la roue d'entraînement (42),
- la rangée de premières billes (59) est disposée radialement à l'intérieur de la rangée de secondes billes (60) et
- la rangée de premières billes (59) peut être enfoncée radialement vers l'extérieur dans la rangée de secondes billes (60) par le prolongement annulaire (58) du piston (51), déplaçable axialement, et son profil extérieur à peu près conique, ce qui permet de modifier l'étendue de l'arc entre les première et seconde faces de retenue (64 et 66) dans des plages importantes.

5. Dispositif de décalage angulaire d'un arbre selon la revendication 4, caractérisé en ce que
- la roue d'entraînement (42) est immobilisée axialement par un prolongement annulaire (47) au moyen d'un élément de palier (45) et reliée à une pièce (48) constituant un couvercle et dans laquelle est formé un cylindre (50),
- un piston (51), monté axialement mobile dans le cylindre (50), est pourvu d'une tige (52) disposée axialement mobile, mais solidarisée en rotation, par un profil d'arbre cannelé (53), dans un alésage récepteur (54) correspondant ménagé dans l'arbre (41) et présentant un profil cannelé (55), et
- la partie avant de l'alésage récepteur (54) contient un ressort de rappel (57) qui agit sur un côté du piston (51) afin de ramener celui-ci à sa position de départ dès que le fluide de pression, appliqué à travers des perçages (67, 68 et 69), cesse d'agir.

6. Dispositif de décalage angulaire d'un arbre selon une des revendications 1 à 5 précédentes, caractérisé en ce qu'un élément de blocage (27/69) est placé dans une rainure radiale de réception (26/62) de la périphérie extérieure de la pièce formant moyeu (3/58), élément de blocage qui, à la disparition de la force de décalage, établit une liaison d'entraînement entre le moyeu (3/58) et la roue d'entraînement (2/42) sous l'action de la force centrifuge ou de la force d'un ressort.
